# EUROPEAN PATENT APPLICATION

(11) **EP 4 372 448 A1**
(43) Date of publication of application: **22.05.2024**
(21) Application number: 22944027.6
(22) Date of filing: 23.11.2022
(51) Int. Cl.: G02B 26/08

(54) **DEVICE FOR SENSING POSITION OF STRUCTURE AND MEMS SCANNER PACKAGE COMPRISING SAME**

(30) Priority: 19.09.2022 KR 20220117649; 31.10.2022 KR 20220142226
(71) Applicant: Wemems Co.,Ltd., Buk-gu, Gwangju 61005 (KR)
(72) Inventor: JO, Kyoungwoo, Gwangju 61693 (KR); KIM, Myeongseop, Gwangju 62253 (KR); LEE, Dongyun, Gwangju 62262 (KR); CHOI, Jinhong, Gwangju 61732 (KR); PARK, Gukhyeon, Incheon 22116 (KR)
(74) Representative: Murgitroyd & Company
(86) International application number: PCT/KR2022/018596
(87) International publication number: WO 2024/063203

(57) **Abstract**

Provided is a MEMS scanner package which includes a MEMS scanner element including a mirror, a light source placed to be spaced apart from a rear of the mirror of the MEMS scanner element by a predetermined interval, and emitting light to a rear side of the mirror, a lens which is positioned between the light source and the mirror, and through which the light emitted from the light source passes, a position sensitive detector which receives light which passes through the lens, and then is reflected from the rear side of the mirror, and a circuit board on which the light source and the position sensitive detector are mounted, and which is electrically connected to each of the light source and the position sensitive detector, in which a center of the lens is spaced apart from an emission center of the light source toward the detector.

## Description

### BACKGROUND

### Technical Field

The present disclosure relates to a device for sensing a rotational angle or a vertical position of a structure and a MEMS scanner package including the same.

### Background Art

A MEMS scanner is a laser beam steering device used for a light detection and ranging (LiDAR) used for measuring a target such as a surrounding terrain, object, obstacle, etc., a projection display using a laser, etc. The MEMS scanner has an advantage such as a small size, a small thickness, low power consumption, low price, etc., as compared with other mechanical scanners, so there is a trend in which the MEMS scanner is increasingly used in various sensing and display fields.

In the LiDAR sensor and the projection display using the MEMS scanner, rotational angle (or vertical position) information of a MEMS scanning mirror is received in real time for accurate and stable driving, so a system needs to be implemented. In the case of a resonant scanner, a resonance frequency may vary depending on a change in an ambient temperature, so a sensor is needed to measure a driving angle of the mirror in real time for monitoring and controlling the resonance frequency. However, since the MEMS scanning mirror has a small size and is generally driven at a high speed, it is difficult to sense an accurate rotational angle.

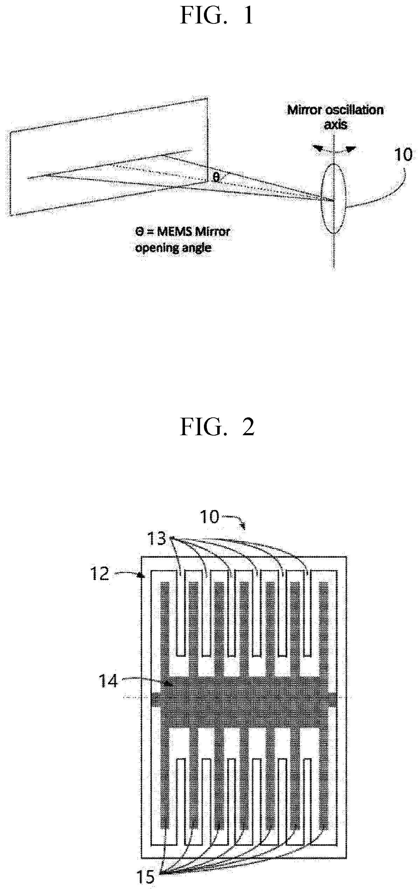

As a method for solving such a problem, as disclosed US Patent No. US10324283B2 (Prior Art Document 1), a scheme of sensing the rotational angle by detecting a capacitance change of a comb structure included in a MEMS driver is being attempted. FIG. 1 illustrates a trajectory in which a laser beam moves according to rotation of the MEMS mirror, and FIG. 2 illustrates a conventional device that detects a comb-structure capacitance change included in the driver, and senses a rotational angle. However, in the case of an electrostatic driving scheme, there is an advantage of miniaturization, but it is difficult to detect a weak change of the capacitance due to inference by a driving signal. Further, it is difficult to acquire an actual waveform of a time domain, and as a result, there is a problem in that a signal processing circuit is complicated in extracting a size and phase of mirror rotation.

As another method, a piezoresistive element in which resistance is changed according to transformation of a spring may be used. In this method, a structure and a circuit are simple, but an impurity doping process is additionally required, and there is disadvantage in that temperature stability is not good.

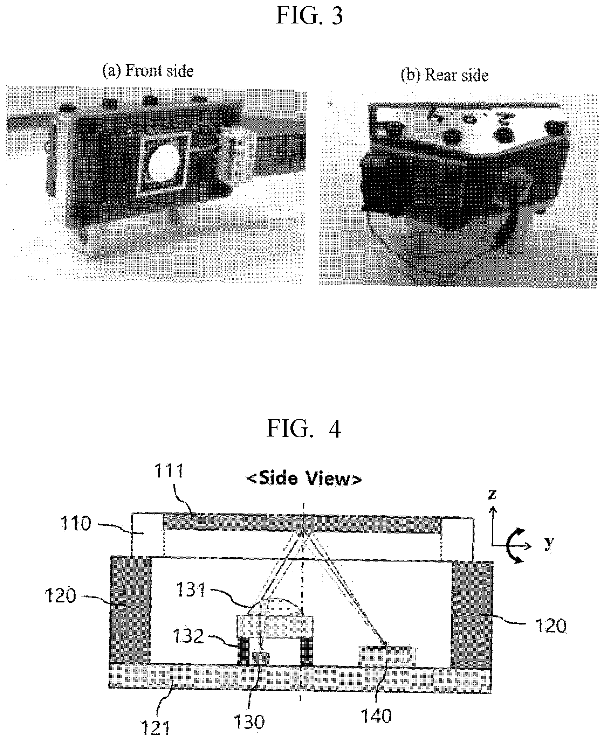

As yet another method, as disclosed in Prior Art Document 2 presented at the 2017 SPIE Conference, a device to which an optical sensing method in which the laser beam is incident on a front side or a rear side of the MEMS scanning mirror to directly acquire a rotational angle position of the mirror as a waveform is applied in a laboratory environment is presented. FIG. 3 is a diagram illustrating a conventional method which makes a laser beam be incident on a front side or a rear side of a MEMS scanning mirror, and detects a positional change of reflected light, and a laser and a position sensitive detector (PSD) has a titling angle at a long distance in order to increase transmission/reception efficiency and measurement accuracy, and when this tilting angle is not present, distortion may occur in a detected signal. However, this method has a problem in that a device is large in size and weight, and a large-area position sensitive detector is required when sensing a wide angle, so a price rises. Further, when the light source and the position sensitive detector are directly mounted on the circuit board for miniaturization, the light source and the position sensitive detector should be placed on the same plane, so if a separate optical system is not used, there is a disadvantage in that it is impossible for light to be incident on a center of the rear side of the scanning mirror at a tilting angle.

### SUMMARY

The present disclosure is contrived to solve the problems in the prior art described above, and provides a miniaturized MEMS scanner package including a device which may measure a real-time waveform for a rotational angle of a scanning mirror, and a driving angle and a phase therefrom in a MEMS scanner.

The present disclosure also provides a miniaturized MEMS scanner package without inference due to a driving signal.

The present disclosure also provides a MEMS scanner which can be stably and accurately driven by configuring feedback control using real-time rotational angle information of the MEMS scanning mirror.

In an aspect, provided is a structure position sensing device, which may include: a measured body; a light source placed to be spaced apart from a rear of the measured body by a predetermined interval and emitting light to a rear side of the measured body; a lens which is positioned between the light source and the measured body, and through which the light emitted from the light source passes; and a detector which receives light which passes through the lens, and then is reflected from the rear side of the measured body, in which a center of the lens may be placed to be spaced apart from an emission center of the light source.

Furthermore, a chief ray of the light passing through the lens may pass through one portion spaced apart from the center of the lens by a predetermined distance. Here, the light emitted from the light source is incident on a center portion of the rear side of the measured body, and in this case, an incident angle is a tiling angle other than in a normal incidence.

Furthermore, the light source and the detector are placed on a horizontal surface by a predetermined interval in a direction which is in line with a rotational axis direction of a mirror. Here, a spacing distance between the light source and the detector may be within a range of 10 to 90% of a lens effective radius from the center of the lens.

Furthermore, the light source may be a vertical cavity surface emitting laser (VCSEL) or an LED.

Furthermore, the lens may be a convex lens which is convex upward or downward, or a both-side convex lens which is convex up and down, or a part thereof. The lens may be a convex cylindrical lens or a part thereof.

Furthermore, a beam emitted from the light source may pass through the convex lens far from the center of the measured body, and then may be reflected on the center portion of the rear side of the measured body at a tilting angle, and then may directly reach the detector without passing through the lens.

Meanwhile, when not a part or the entirety of the convex lens is used, the chief ray of the light which passes through one portion of the lens, and then is reflected from the rear side of the measured body may pass through the other portion of the lens.

Furthermore, when the lens is a spherical or cylinder type concave lens, a beam emitted from the light source may pass through the concave lens toward a portion close to the center of the measured body, and then may be incident on a central portion of a rear side of the measured body at a tilting angle.

Furthermore, the detector is a 1D or 2D position sensitive detector in which an output varies depending on a position on which the light is incident, and besides, may adopt a photo detector.

Furthermore, the detector may include one 2D position sensitive detector or at least two 1D detectors.

Furthermore, two 1D detectors may be arranged orthogonally to each other, or two 1D detectors may be both arranged vertically or horizontally.

Furthermore, when the mirror rotates on 1 axis, a long axis of the 1D position sensitive detector may be placed in an orthogonal direction to the rotational axis of the mirror, and as the measured body rotates, a path of the light emitted from the light source may be changed along the long axis of the position sensitive detector.

Furthermore, a spacing direction between the light source and the detector may be vertical to a rotational axis direction of the mirror, and in this case, a long-axis direction of the 1D position sensitive detector is vertical to the rotational axis of the mirror which is the measured body similarly above.

Further, with respect to a positional change of the measured body according to the rotation of the measured body, an incident angle may be compensated with arctan(x/h) in order to acquire a more linear voltage signal from the position sensitive detector, and here, x represents a movement distance of a laser beam above the position sensitive detector, and h represents a height difference between the rear side of the mirror and the position sensitive detector.

In another aspect, provided is a MEMS scanner package which may include: a MEMS scanner element including a mirror; a first circuit board on which the MEMS scanner element is mounted; a light source placed to be spaced apart from a rear of the mirror of the MEMS scanner element by a predetermined interval and emitting light to a rear side of the mirror; a lens which is positioned between the light source and the mirror, and through which the light emitted from the light source passes; a detector which receives light which passes through the lens, and then is reflected from the rear side of the mirror; and a second circuit board on which the light source and the detector are mounted, and which is electrically connected to each of the light source and the detector, in which a center of the lens may be placed to be spaced apart from an emission center of the light source. Here, the MEMS scanner package may further include a spacer placed between the light source and the lens so as to maintain the interval between the light source and the lens to be constant.

In yet another aspect, provided is a structure position sensing device which may include: a measured body; a light source placed to be spaced apart from a rear of the measured body by a predetermined interval and emitting light to a rear side of the measured body; a detector which receives light which is emitted from the light source, and reflected from the rear side of the measured body; and an integrated support which has a first surface supporting the light source and a second surface supporting the detector, and is tilted at a predetermined angle so that the first surface and the second surface face each other, in which the light emitted from the light source may be incident on the rear side of the measured body at a tilting angle other than in a normal incidence.

Here, a support which is bent at a predetermined angle may be placed in the light source and the detector so that light is normally incident, and the structure position sensing device may further include a flexible circuit board electrically connected to each of the light source and the detector.

In still yet another aspect, provided is a MEMS scanner package which may include: a MEMS scanner element including a mirror; a circuit board on which the MEMS scanner element is mounted; a light source placed to be spaced apart from a rear of the mirror of the MEMS scanner element by a predetermined interval and emitting light to a rear side of the mirror; a detector which receives light which is emitted from the light source, and reflected from the rear side of the mirror; and an integrated support which has a first surface supporting the light source and a second surface supporting the position sensitive detector, and is tilted at a predetermined angle so that the first surface and the second surface face each other, in which the light emitted from the light source may be incident on the rear side of the mirror at a tilting angle other than in a normal incidence.

The present disclosure configured as above has an effect in that the real-time rotational angle information of the MEMS scanning mirror can be accurately and stably sensed in a state without interference of the driving signal.

Further, the MEMS scanner of the MEMS scanner package according to the present disclosure has an effect in that since the feedback control can be configured using the rotational angle information acquired by the real-time waveform according to the mirror position, the MEMS scanner is enabled to be stably and accurately driven.

Further, since the MEMS scanner package according to the present disclosure can be miniaturized, and produced at a low price, there is an effect in that it is easy to design a system using the MEMS scanner package, and the MEMS scanner package can be applied to various fields.

### BRIEF DESCRIPTION OF THE DRAWINGS

FIG. 1 illustrates a structure and a rotational actuation state of a MEMS mirror, and FIG. 2 is a diagram illustrating a comb-shaped electrode structure included in a conventional MEMS driver to sense a rotational angle of a mirror.
FIG. 3 is a diagram illustrating a conventional device which makes a laser beam be incident on a front side or a rear side of a MEMS scanning mirror, and senses a positional change of reflected light.
FIGS. 4 and 5 are a side view and a front view of a MEMS scanner package including a structure position sensing device according to a first embodiment of the present disclosure.
FIGS. 6 and 7 are a side view and a front view illustrating placement of a light source and a lens in the MEMS scanner package according to the first embodiment of the present disclosure.
FIGS. 8 to 10 are a plan view, a front view, and a side view illustrating a progress path of a laser beam according to rotation of a scanning mirror in the structure position sensing device of FIGS. 4 and 5.
FIGS. 11 and 12 are graphs showing an optical numerical analysis result by rotation of the scanning mirror of the MEMS scanner package according to the first embodiment of the present disclosure.
FIG. 13 is a diagram illustrating a structure of a lens which is convex downward in a MEMS scanner package according to a second embodiment of the present disclosure;
FIG. 14 is a diagram illustrating a structure of a convex lens in which both sides are convex in a MEMS scanner package according to a third embodiment of the present disclosure.
FIG. 15 is a diagram illustrating a structure in which only a part of a left portion of a convex lens in a MEMS scanner package according to a fourth embodiment of the present disclosure.
FIGS. 16 and 17 are a side view and a front view of a MEMS scanner package including a support in a structure position sensing device according to a fifth embodiment of the present disclosure.
FIGS. 18 to 20 are a plan view, a front view, and a side view illustrating a progress path of a laser beam according to rotation of a scanning mirror in the MEMS scanner package of FIGS. 16 and 17.
FIGS. 21 and 22 are a side view and a front view including a step structure in a MEMS scanner package according to a sixth embodiment of the present disclosure.
FIGS. 23 and 24 are a side view and a front view illustrating a MEMS scanner package according to a seventh embodiment of the present disclosure.
FIGS. 25 and 26 are a side view and a front view illustrating a MEMS scanner package according to an eighth embodiment of the present disclosure.
FIGS. 27 and 28 are a side view and a front view illustrating a MEMS scanner package according to a ninth embodiment of the present disclosure.
FIGS. 29 to 31 are plan views illustrating an array of a position sensitive detector for 2D measurement in the MEMS scanner package according to the first embodiment of the present disclosure.

### DESCRIPTION OF EXEMPLARY EMBODIMENTS

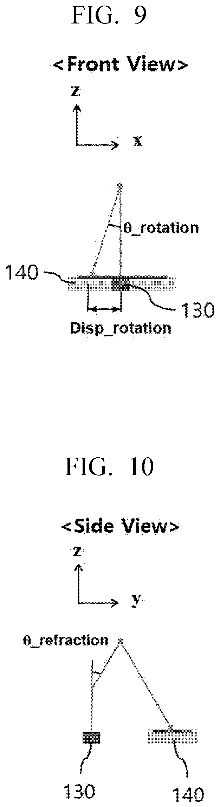

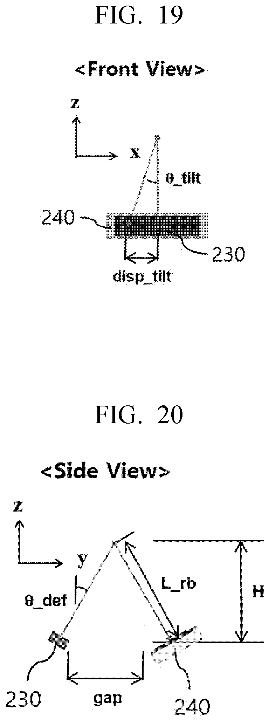

Hereinafter, exemplary embodiments of the present disclosure will be described in detail with reference to FIGS. 4 to 31.

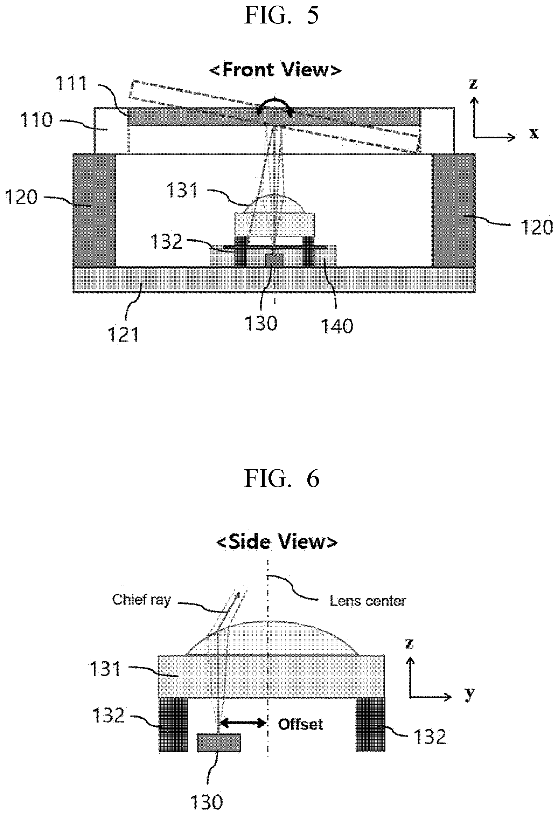

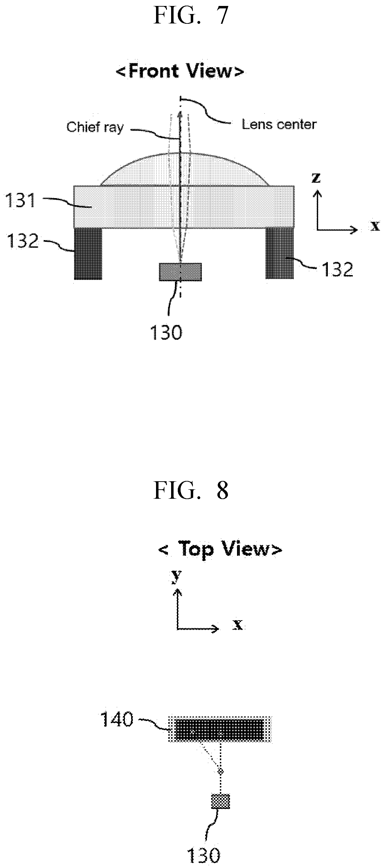

FIGS. 4 and 5 are a side view and a front view of a MEMS scanner package including a structure position sensing device according to a first embodiment of the present disclosure, and FIGS. 6 and 7 are a side view and a front view illustrating placement of a light source and a lens in the MEMS scanner package according to the first embodiment of the present disclosure.

Referring to FIGS. 4 to 7, a structure position sensing device according to a first embodiment of the present disclosure includes: a mirror 111 of a MEMS scanner element 110 as a measured body, a light source 130 placed to be spaced apart from a rear of the mirror 111 of the MEMS scanner element 110 by a predetermined interval and emitting light to a rear side of the mirror 111, a lens 131 which is positioned between the light source 130 and the mirror 111, and through which a chief ray of the light emitted from the light source 130 passes, and a position sensitive detector 140 which receives the light passing through the lens 131, and then reflected from the rear side of the mirror 111.

The chief ray of the light passing through the lens 131 passes through one portion of the lens 131 spaced apart from the center of the lens 131 by a predetermined distance. For example, when the chief ray of the light emitted from the light source 130 passes through one side of a half of the lens, the chief ray of the light reflected on the rear side of the mirror 111 may pass through the other side of the half of the lens.

In the structure position sensing device, a rotational angle of the mirror 111 of the MEMS scanner element 110 as the measured body is measured by the position sensitive detector 140. In FIG. 5, a state in which the mirror 111 is rotated is expressed by dotted lines.

Referring to FIGS. 4 and 5, the MEMS scanner package according to the first embodiment of the present disclosure includes the structure position sensing device, and includes a first circuit board 120 on which the MEMS scanner element 110 is mounted, and a second circuit board 121 on which the light source 130 and the position sensitive detector 140 are mounted, and which is electrically connected to each of the light source 130 and the position sensitive detector 140.

Further, a spacer 120 is placed between the light source 130 and the lens 131 so as to maintain the interval between the light source 130 and the lens 131 to be constant. The spacer 120 is placed on the second circuit board 121, and the lens 131 is placed above the spacer 120.

When the lens 131 is a convex lens, the center of the lens is placed to be spaced apart from an emission center of the light source 130 toward the detector, so the light emitted from the light source 130 is incident on the rear side of the mirror 111 at a tilting angle other than in a normal incidence. A spacing distance between the center of the lens 131 and the emission center of the light source 130 may have a range of 10 to 90% of a lens effective radius from the center of the lens 131.

The light source 130 and the position sensitive detector 140 are placed in line to be spaced apart from each other on a horizontal surface of the second circuit board 121.

The light source 130 may be a laser beam. In this case, while the laser beam emitted from the light source 130 passes through the lens 131, an optical path of the chief ray is refracted in a horizontal direction, and at the same time, the laser beam is focused or parallel light is formed.

When the scanning mirror 111 rotates on 1 axis (y axis in FIGS. 4 and 5), if the light source and the detector are placed to be spaced in a direction which is in line with a rotational axis direction of the mirror on the horizontal surface, a long axis (x axis) of a 1-axis position sensitive detector 140 is placed in a vertical direction to a rotational axis (y axis) of the MEMS mirror 111.

That is, when the mirror 111 rotates around the y axis, the position sensitive detector 140 elongates in the long-axis (x-axis) direction which is vertical to the rotational axis (y axis) of the mirror 111, so a path of the light emitted from the light source 130 is changed along the long axis (x axis) of the position sensitive detector 140 as the mirror 111 rotates.

When the mirror 111 rotates around the x axis, the position sensitive detector 140 elongates in the long-axis (y-axis) direction which is vertical to the rotational axis (x axis).

As the MEMS mirror 111 rotates, a voltage signal for a positional change is generated from the position sensitive detector 140, and a linear rotational angle may be finally derived through a process of converting positional information into an angle.

As the light source 130, a vertical cavity surface emitting laser (VCSEL) or an LED may be used.

The lens 131 may be made of a glass or plastic material, and may have a spherical or aspheric shape.

The detector is a position sensitive detector in which an output varies depending on a position on which the light is incident, and may be used as a 1D or 2D position sensitive detector.

FIGS. 8 to 10 are a plan view, a front view, and a side view illustrating a progress path of a laser beam according to rotation of a scanning mirror in the position sensing device of FIGS. 4 and 5. Here, θ_rotation represents a rotational angle of the mirror 111 with respect to the rotational axis (y axis), θ_refraction represents a refractive angle of light by the lens 131, and Disp_rotation represents a displacement of a light point according to the rotational angle on the detector.

The position sensitive detector 140 may continuously measure a 1D or 2D position of the light point on the surface of the detector.

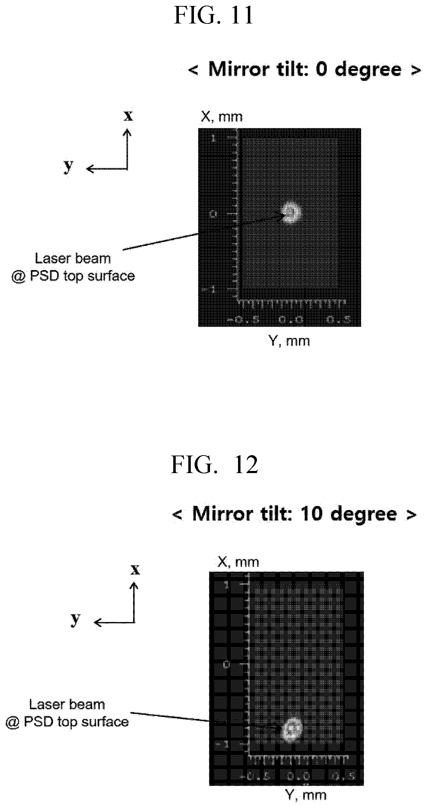

FIGS. 11 and 12 are graphs showing an optical numerical analysis result by rotation of the scanning mirror of the MEMS scanner package according to the first embodiment of the present disclosure. FIG. 11 illustrates that a long axis (x axis)-direction displacement detected by the position sensitive detector in a state in which the scanning mirror does not rotate is 0, and FIG. 12 illustrates an example in which the long axis (x axis)-direction displacement detected by the position sensitive detector when the scanning mirror rotates at 10 degrees around the rotational axis (y axis) is approximately -0.8 mm.

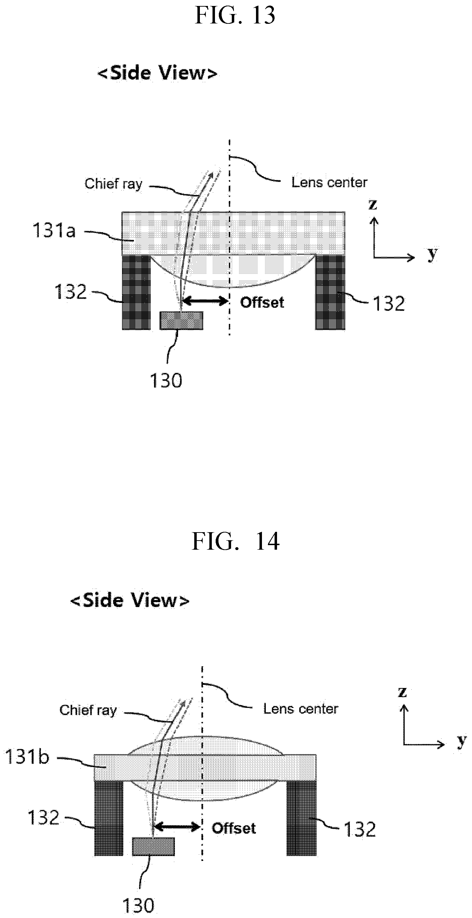

FIG. 13 is a diagram illustrating a structure of a lens in a MEMS scanner package according to a second embodiment of the present disclosure. The first embodiment of FIGS. 4 to 7 indicates an example in which the lens 131 is the convex lens which is convex upward, and in the second embodiment of FIG. 13, a lens 131a is a convex lens which is convex downward, and other components of the second embodiment are the same as those of the first embodiment.

FIG. 14 is a diagram illustrating a structure of a lens in a MEMS scanner package according to a third embodiment of the present disclosure. In this embodiment, a lens 131b is a double-sided convex lens which is convex up and down.

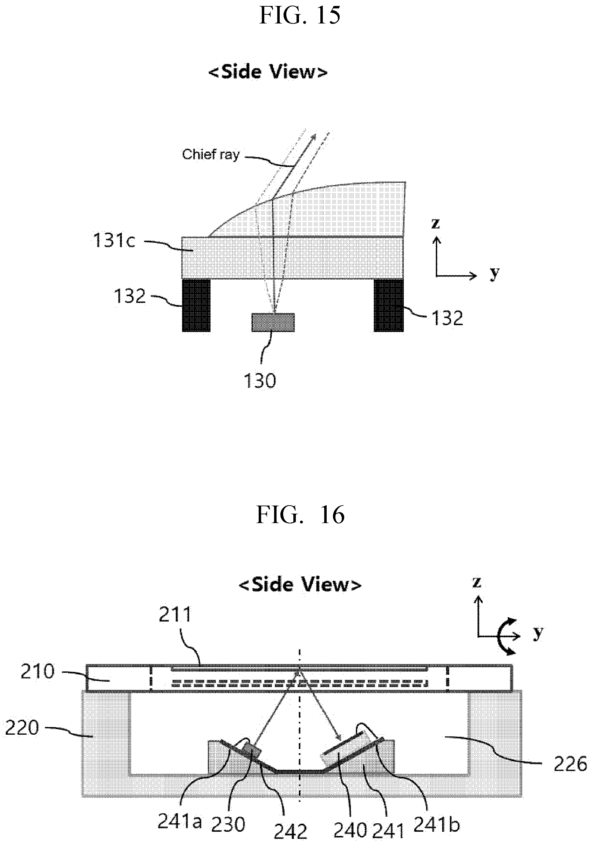

FIG. 15 is a diagram illustrating a structure of a lens in a MEMS scanner package according to a fourth embodiment of the present disclosure, and in this embodiment, a lens 131c is a part of the convex lens which is convex upward. Here, the lens 131c may also adopt a cylinder type convex lens.

Further, when the lens is a hemispherical or cylinder type concave lens, a beam emitted from the light source may pass through the concave lens toward a portion close to the center of the measured body, and then may be incident on a central portion of a rear side of the measured body at a tilting angle.

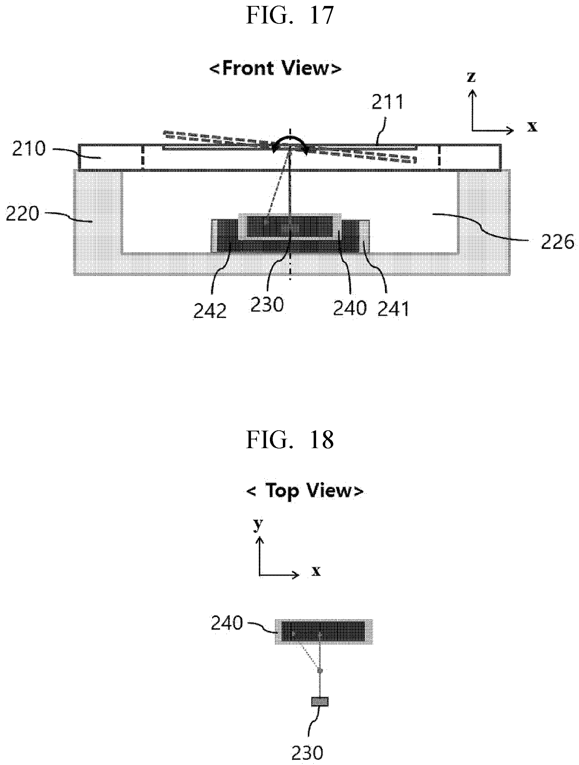

FIGS. 16 and 17 are a side view and a front view of a MEMS scanner package including a structure position sensing device according to a fifth embodiment of the present disclosure.

Referring to FIGS. 16 and 17, the structure position sensing device according to the fifth embodiment of the present disclosure includes a mirror 211 of a MEMS scanner element 210 as a measured body, a light source 230 placed to be spaced apart from a rear of the mirror 211 of the MEMS scanner element 210 by a predetermined interval and emitting light to a rear side of the mirror 211, a position sensitive detector 240 which receives the light emitted from the light source 230, and reflected from the rear side of the mirror 211, and a support 241 having a first surface 241a supporting the light source 230 and a second surface 241b supporting the position sensitive detector 240, and tilted at a predetermined angle so that the first surface 241a and the second surface 241b face each other. The support 241 may be integrally formed to include the first surface 241a and the second surface 241b.

In the structure position sensing device, a rotational angle of the mirror 210 of the MEMS scanner element 211 as the measured body is measured by the position sensitive detector 240.

Referring to FIGS. 16 and 17, the MEMS scanner package according to the first fifth embodiment of the present disclosure includes the structure position sensing device, and further includes a circuit board 220 on which the MEMS scanner element 210 is mounted. An inherent space 226 is formed in the circuit board 220, and the light source 230, the position sensitive detector 240, and the support 241 of the position sensing device are built in the inherent space 226.

An emission surface of the light source 230 forms a predetermined angle not to be in line with the rotational axis (y axis) of the scanning mirror 211, so the light is slantly incident, and then reflected on the mirror 211, and received by the position sensitive detector 240 positioned at an opposite side.

A flexible circuit board 242 is placed to be bent at a predetermined angle between the light source 230 and the support 241, and between the position sensitive detector 240 and the support 241, and the flexible circuit board 242 is electrically connected to each of the light source 230 and the position sensitive detector 240. The flexible circuit board 242 may be formed by a polyimide film and a copper wire.

That is, the mirror 211 rotates around the rotational axis (y axis), the position sensitive detector 240 elongates in the long-axis (x-axis) direction which is vertical to the rotational axis (y axis) of the mirror 211, so a path of the light emitted from the light source 230 is changed along the long axis (x axis) of the position sensitive detector 240 as the mirror 211 rotates. This method is also applied to a case where the mirror rotates around the y axis.

FIGS. 18 to 20 are a plan view, a front view, and a side view illustrating a progress path of a laser beam according to rotation of a scanning mirror in the structure position sensing device of FIGS. 16 and 17, and a detailed description thereof is omitted.

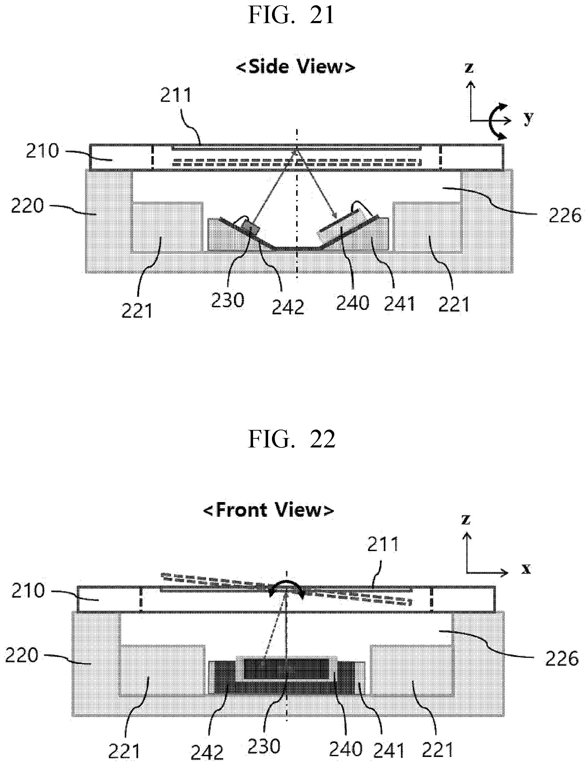

FIGS. 21 and 22 are a side view and a front view including a step structure in a MEMS scanner package according to a sixth embodiment of the present disclosure, and in this embodiment, a step structure 221 surrounding the structure position sensing device is further formed in the inherent space 226 of the circuit board 220, so it is easy to align a position where the position sensing device is bonded. Further, the sixth embodiment of the present disclosure may have the circuit board 220 in which a step is additionally formed by the step structure 221 other than the step by the inherent space 226 to achieve a 2-stage step structure.

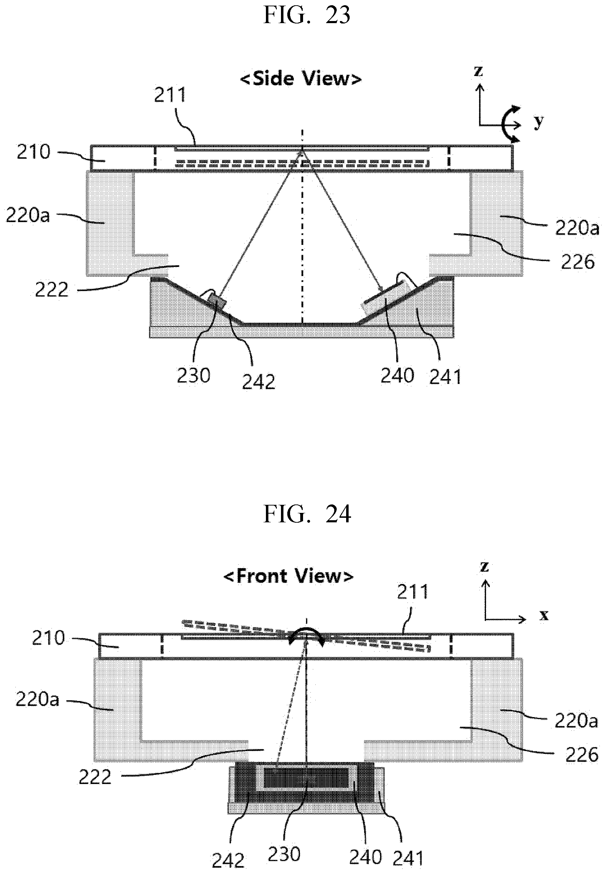

FIGS. 23 and 24 are a side view and a front view illustrating a MEMS scanner package according to a seventh embodiment of the present disclosure. In this embodiment, the inherent space 226 is formed in a circuit board 220a, and a hole 222 is formed and penetrated in the inherent space 226. A MEMS scanner element 210 is mounted on the circuit board 220a, and the light source 230, the position sensitive detector 240, the flexible circuit board 242, and the support 241 supporting the light source 230, the positional detector 240, and the flexible circuit board 242 are mounted to cover the hole from the bottom.

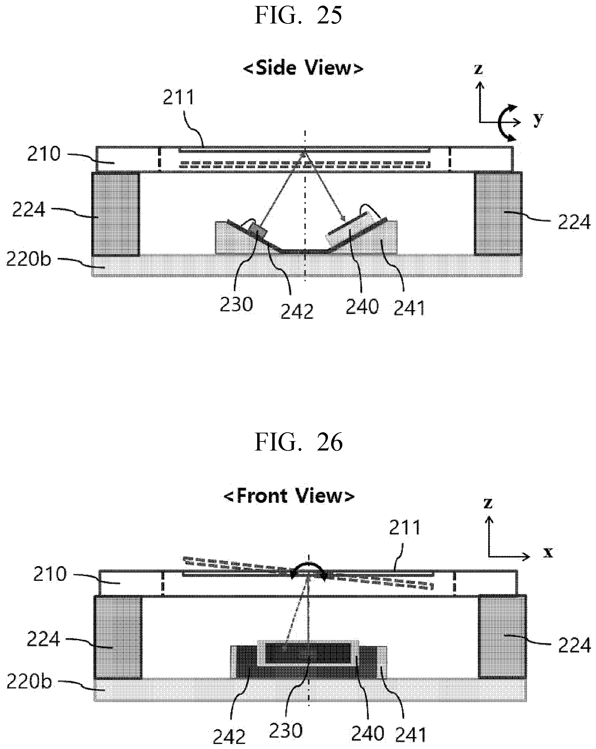

FIGS. 25 and 26 are a side view and a front view illustrating a MEMS scanner package according to an eighth embodiment of the present disclosure. In this embodiment, the light source 230, the position sensitive detector 240, the flexible circuit board 242, and the support 241 supporting the light source 230, the positional detector 240, and the flexible circuit board 242 are mounted on a circuit board 220b between the MEMS scanner element 210 and the flat circuit board 220b, and a spacer 224 is placed between the MEMS scanner element 210 and the circuit board 220b. The support 241 may be integrally formed to include the first surface 241a and the second surface 241b as described in the fifth embodiment of FIGS. 16 and 17.

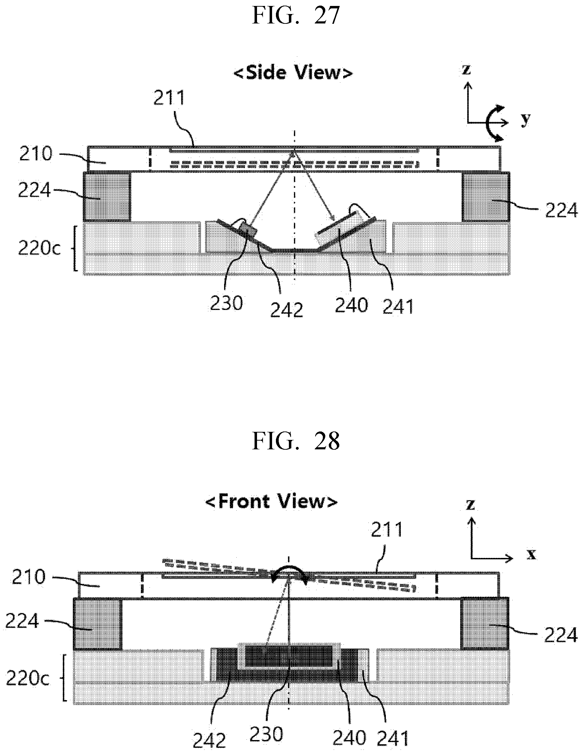

FIGS. 27 and 28 are a side view and a front view illustrating a MEMS scanner package according to a ninth embodiment of the present disclosure. This embodiment is different from the eighth embodiment in that an inherent space is formed in a circuit board 220c, and the light source 230, the position sensitive detector 240, the flexible circuit board 242, and the integrated support 241 supporting the light source 230, the positional detector 240, and the flexible circuit board 242 are mounted on the inherent space, and is the same as the eighth embodiment in terms of the remaining configurations.

Meanwhile, in a 3D image sensor and a 3D display using the scanner, scanning the laser beam in 2D is required. To this end, scanning may be conducted by using two 1-axis scanners, or when miniaturization is required, scanning may be conducted using one mirror on 2 axes.

In the mirror which moves on 2 axes, a slow axis having a low driving frequency and a fast axis having a high driving frequency are generally combined. In order to precisely measure a 2D driving angle, a waveform may be measured using a 2D position sensitive detector PSD jointly with the lens, and a size and a phase of the driving angle may be extracted from the measured waveform.

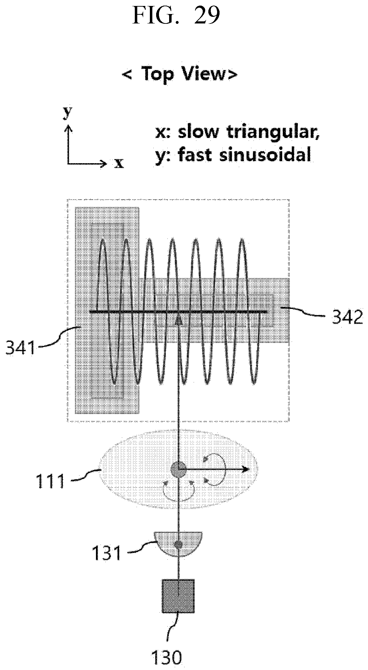

As another method, when one 1D PSD is placed in a slow-axis direction of the laser beam, there is a disadvantage in that the waveform may not be viewed. In order to complement this, as illustrated in FIG. 29, when two 1D position sensitive detectors 341 and 342 are arranged vertically to each other, the fast-axis waveform may be acquired from the vertical position sensitive detector 341, and information on slow-axis scan may be acquired from the horizontal position sensitive detector 342.

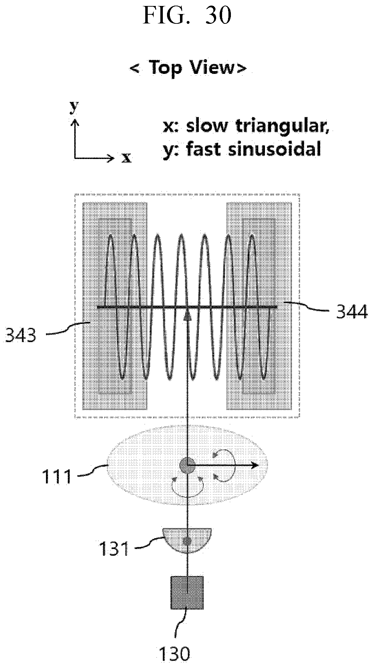

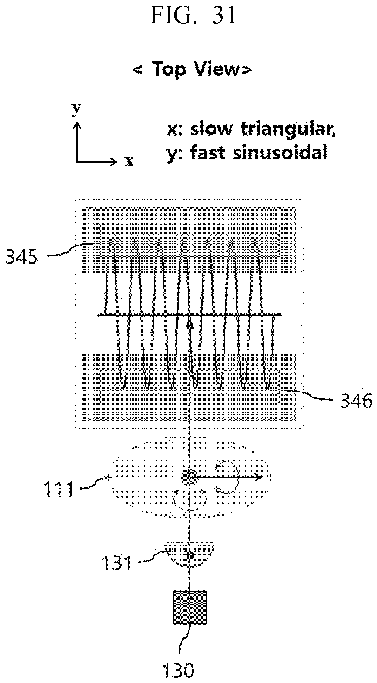

Further, as illustrated in FIG. 30, when two position sensitive detectors 343 and 344 are arranged in a vertical direction which is a fast-axis direction, the fast-axis waveform may be directly acquired from two position sensitive detectors 343 and 344, and information on a slow axis may be extracted from two outputs having a time difference. As illustrated in FIG. 31, when two position sensitive detectors 345 and 346 are both horizontally arranged, the information is on the fast axis and the slow axis, but there is a disadvantage in that the waveform may not be acquired.

The above description just illustrates the technical spirit of the present disclosure and various changes, modifications, and substitutions can be made by those skilled in the art to which the present disclosure pertains without departing from an essential characteristic of the present disclosure. Therefore, the exemplary embodiments are provided for illustrative purposes only and are not intended to limit the technical concept of the present disclosure. The scope of the technical concept of the present disclosure is not limited thereto. The protection scope of the present disclosure should be construed based on the following appended claims and it should be appreciated that the technical spirit included within the scope equivalent to the claims belongs to the scope of the present disclosure.

### [Detailed Description of Main Elements]

| | | | |
|---|---|---|---|
| MEMS scanner element | | 222: | Hole |
| 111, 211: | Mirror | 224: | Spacer |
| 120: | First circuit board | 130, 230: | Light source |
| 121: | Second circuit board | 131, 131a, 131b, 131c: | Lens |
| 220, 220a, 220b, 220c: | Circuit board | 132: | Spacer |
| 221: | Step structure | | |
| 140, 240, 341, 342, 343, 344, 345, 346: | Position sensitive detector | | |
| 241: | Support | 242: | Flexible circuit board |
| 241a: | First surface | 226: | Inherent space |
| 241b: | Second surface | | |

## Claims

1. A structure position sensing device comprising:
a measured body;
a light source placed to be spaced apart from a rear of the measured body by a predetermined interval and emitting light to a rear side of the measured body;
a lens which is positioned between the light source and the measured body, and through which the light emitted from the light source passes; and
a detector which receives light which passes through the lens, and then is reflected from the rear side of the measured body,
wherein a center of the lens is placed to be spaced apart from an emission center of the light source.

2. The structure position sensing device of claim 1, wherein a chief ray of the light passing through the lens passes through one portion spaced apart from the center of the lens by a predetermined distance.

3. The structure position sensing device of claim 2, wherein the light emitted from the light source is incident on the rear side of the measured body at a tiling angle other than in a normal incidence.

4. The structure position sensing device of claim 2, wherein the light source and the detector are placed on a horizontal surface in line by a predetermined interval.

5. The structure position sensing device of claim 4, wherein a spacing distance between the light source and the detector is within a range of 10 to 90% of a lens effective radius from the center of the lens.

6. The structure position sensing device of claim 1, wherein the light source is a vertical cavity surface emitting laser (VCSEL) or an LED.

7. The structure position sensing device of claim 1, wherein the lens has a convex lens or convex cylindrical lens.

8. The structure position sensing device of claim 2, wherein the chief ray of the light which passes through one portion of the lens, and then is reflected from the rear side of the measured body passes through the other portion of the lens.

9. The structure position sensing device of claim 1, wherein the detector includes one 2D position sensitive detector or at least two 1D detectors.

10. The structure position sensing device of claim 9, wherein two 1D detectors are arranged orthogonally to each other, or two 1D detectors are both arranged vertically or horizontally.

11. The structure position sensing device of claim 9, wherein the measured body rotates around a rotational axis, and
a long axis of the 1D detector is placed in an orthogonal direction to the rotational axis of the measured body and as the measured body rotates, a path of the light emitted from the light source is changed along the long axis of the detector.

12. A MEMS scanner package comprising:
a MEMS scanner element including a mirror;
a first circuit board on which the MEMS scanner element is mounted;
a light source placed to be spaced apart from a rear of the mirror of the MEMS scanner element by a predetermined interval and emitting light to a rear side of the mirror;
a lens which is positioned between the light source and the mirror, and through which the light emitted from the light source passes;
a detector which receives light which passes through the lens, and then is reflected from the rear side of the mirror; and
a second circuit board on which the light source and the detector are mounted, and which is electrically connected to each of the light source and the detector,
wherein a center of the lens is placed to be spaced apart from an emission center of the light source.

13. The MEMS scanner package of claim 12, wherein a chief ray of the light passing through the lens passes through one portion spaced apart from the center of the lens by a predetermined distance.

14. The MEMS scanner package of claim 13, wherein the light source and the detector are placed on a horizontal surface of the second circuit board in line by a predetermined interval.

15. The MEMS scanner package of claim 12, further comprising:
a spacer placed between the light source and the lens so as to maintain the interval between the light source and the lens to be constant.

16. A structure position sensing device comprising:
a measured body;
a light source placed to be spaced apart from a rear of the measured body by a predetermined interval and emitting light to a rear side of the measured body;
a detector which receives light which is emitted from the light source, and reflected from the rear side of the measured body; and
an integrated support which has a first surface supporting the light source and a second surface supporting the detector, and is tilted at a predetermined angle so that the first surface and the second surface face each other,
wherein the light emitted from the light source is incident on the rear side of the measured body at a tilting angle other than in a normal incidence.

17. The structure position sensing device of claim 16, further comprising:
a flexible circuit board electrically connected to each of the light source and the detector.

18. The structure position sensing device of claim 17, wherein the measured body rotates around a rotational axis, and
the detector includes at least one 1D detector, and as a long axis of the 1D detector is placed in an orthogonal direction to the rotational axis of the measured body and as the measured body rotates, a path of the light emitted from the light source is changed along the long axis of the detector.

19. A MEMS scanner package comprising:
a MEMS scanner element including a mirror;
a circuit board on which the MEMS scanner element is mounted;
a light source placed to be spaced apart from a rear of the mirror of the MEMS scanner element by a predetermined interval and emitting light to a rear side of the mirror;
a detector which receives light which is emitted from the light source, and reflected from the rear side of the mirror; and
an integrated support which has a first surface supporting the light source and a second surface supporting the position sensitive detector, and is tilted at a predetermined angle so that the first surface and the second surface face each other,
wherein the light emitted from the light source is incident on the rear side of the mirror at a tilting angle other than in a normal incidence.
